# EUROPEAN PATENT APPLICATION

(11) **EP 1 271 365 A1**
(43) Date of publication of application: **02.01.2003**
(21) Application number: 00302655.6
(22) Date of filing: 30.03.2000
(51) Int. Cl.: G06F 17/60, G06F 17/30

(54) **Customised content delivery**

(71) Applicant: Gavoa Ltd, London W140QH (GB)
(72) Inventor: The designation of the inventor has not yet been filed

(57) **Abstract**

A first web server machine (5) includes a web server (51) and a database (53) of user profile information. A web page (1) includes a banner (4) that is provided from a second web server machine (7). The request for the banner (4), from a client machine (6) displaying the page (1), includes a unique session id. Using this session id, the second web server machine (7) obtains the client's (6) user's profile from the database (53) and customises the banner (4) accordingly before sending it to the client machine (6)

## Description

The present invention relates firstly to a method of operating a server machine to deliver customised content to a client machine over a network, the method comprising receiving a request for content from a client machine via a network, the request including a resource locator and supplementary data, and secondly to a method of delivering customised content to a client machine over a network, the method comprising receiving a request for a hypermedia document from a hypermedia client on a client machine via a network and dispatching a hypermedia document to the hypermedia client via the network, the document including means to incorporate content, from a location other than that from which the document was served, in the presented form thereof.

Advertising by way of "banners" on web pages is ubiquitous on the World Wide Web. Much of this advertising is carried out by Doubleclick, Inc.

Typically, a host web page will contain a link to a Doubleclick server which causes an advertising banner to be incorporated into the page as it is displayed by a web browser. However, it order to provide some degree of customisation or user-dependent control of the advertisements provided, personal details from the user's computer are sent to the Doubleclick server with the request for the banner.

Such a mode of operation is undesirable to user's who perceive it as an invasion of their privacy. However, targeted advertising is of great importance to advertisers.

It is an aim of the present invention to provide a system whereby advertising, or other matter, can be customised according to the user.

In view of the likely distributed nature of embodiments of the present invention and the fact that patents are inherently territorial, protection is sought independently for the major components of embodiments of the present invention.

In a first aspect, the present invention is characterised by querying a database at the remote location in dependence on said supplementary data to obtain control data, e.g. a user profile, and delivering content, configured and/or selected in dependence on said control data, to said client machine.

The content may be graphical or audio in nature.

Preferably, the content is produced from a file comprising both content definition data and processing definition data and the content definition data is modified or selected in dependence on the control data in a manner defined by said processing definition data. Consequently, a common program may be used to produce a great variety of customised banners, for example, simplifying the server and giving flexibility to content designers.

Conveniently, the supplementary data is comprises in a cookie. However, this need not be the case. A hidden HTML form input element may be used or the supplementary data may be included directly in the URL for the content as it appears in the document source. More preferably, the supplementary data is destroyed when the content is provided to the client machine.

In a second aspect, the present invention is characterised by including, in said document, means whereby supplementary data is sent with a request for said content and serving a request for information from a database, the request for information from the database being received from the source of said content and being derived from or comprising said supplementary data.

Preferably, supplementary data is generated in dependence on a request for a hypermedia document from the hypermedia client.

Conveniently, the supplementary data is comprised in a cookie. However, as stated above, this is not essential.

The methods of the first and second aspects of the present invention are performed together to provide a user with a hypermedia document with embedded customised content.

The present invention extends to apparatus configured for performing the methods of the present invention.

An embodiments of the present invention will now be described, by way of example, with reference to the accompanying drawings, in which: -
Figure 1 shows a web page including a banner;
Figure 2 illustrates the large-scale architecture of a system embodying the present invention;
Figure 3 shows the client machine of Figure 1;
Figure 4 shows the portal web server machine of Figure 1;
Figure 5 shows the banner server machine of Figure 1;
Figure 6 illustrates a content definition entity;

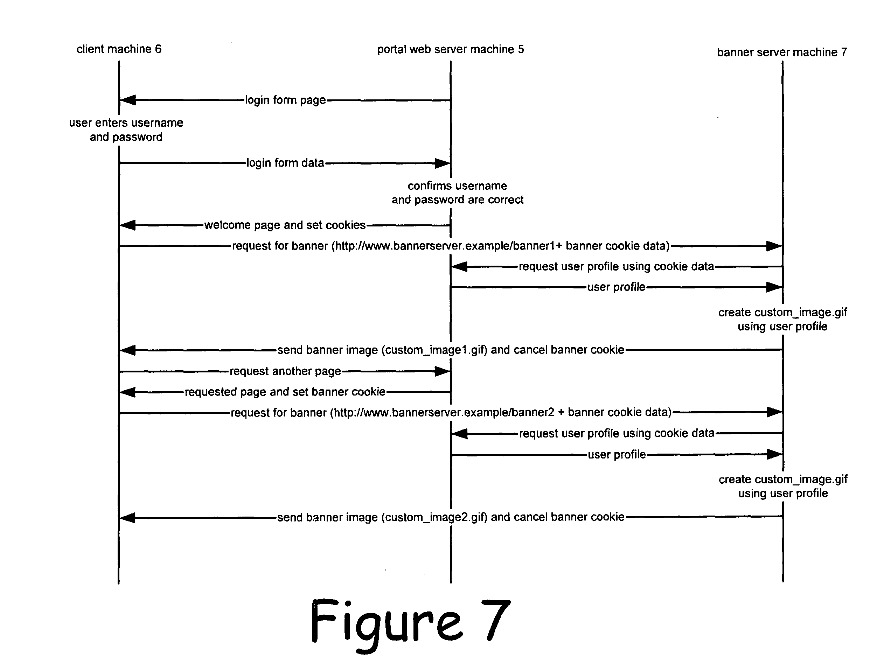

Figure 7 shows the signalling between the client machine and the server machines of Figure 1; and
Figure 8 is a flow chart illustrating the operation of the banner server machine of Figure 1.

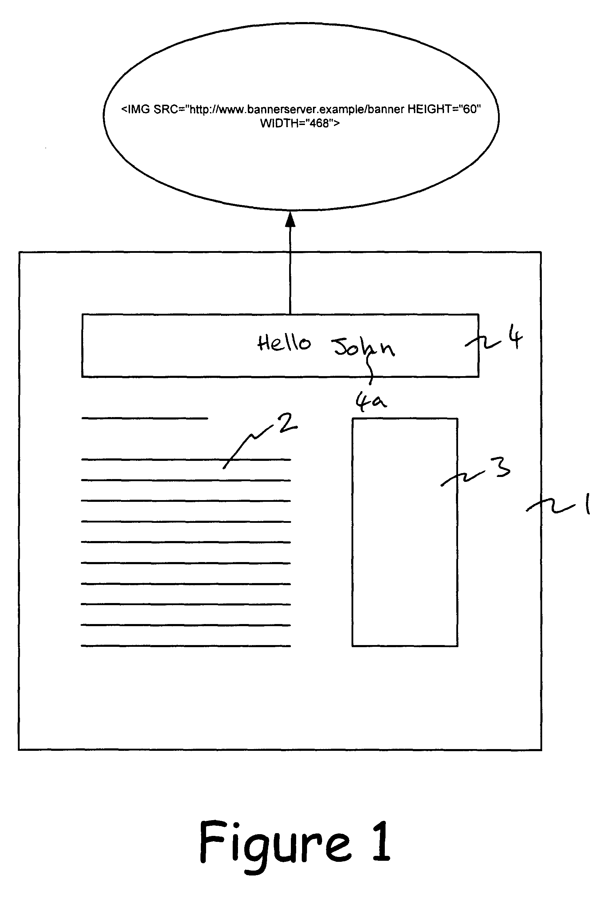

Referring to Figure 1, a web page 1 comprises a body of text 2, an image 3 to the right of the text and an animated banner 4 across the page above the text 2 and the image 3.

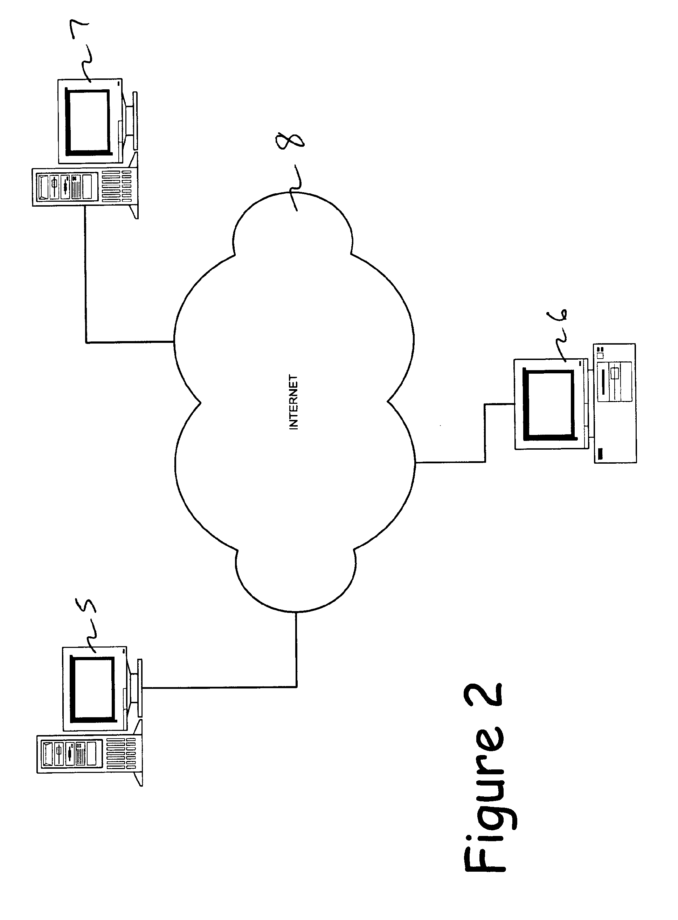

Referring to Figure 2, the web page 1, except from the banner 4, is provided by a portal web server machine 5 and displayed by a client machine 6. The banner 4 is provided from a banner server machine 7. The communication between the client machine 6 and the portal web server machine 5 and between the client machine 6 and the banner server machine 7 takes place across the Internet 8.

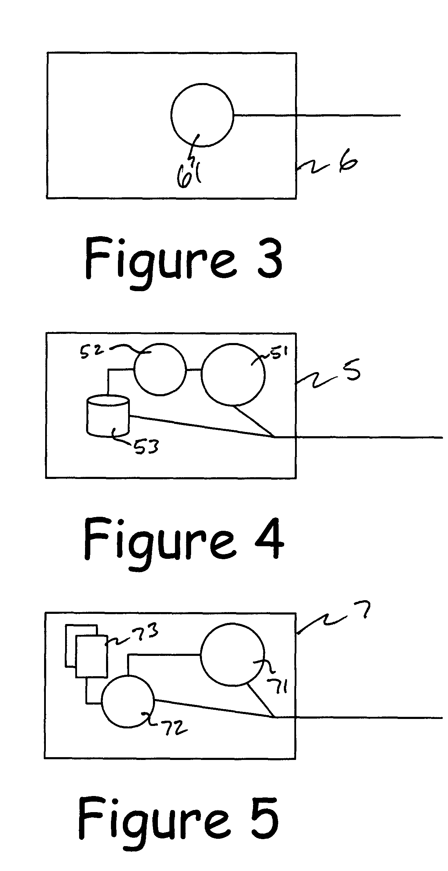

Referring to Figure 3, the client machine 6 is a conventional personal computer running a web browser program 61.

Referring to Figure 4, the portal web server machine 5 comprises a high-performance computer system running a web server process 51 with associated CGI (Common Gateway Interface) processes 52. A database 53 is accessible to the CGI processes 52.

The portal web server machine 5 provides services to users, such as customised news feeds, by means of CGI processes 52. In order to obtain these services, a user must register with the portal web server machine 5. The registration process is conventional and implemented by CGI processes 52 which store details about the user and the user's interests in the database 53.

Referring to Figure 5, the banner server 7 comprises a high-performance computer system running a web server process 71 with associated banner generation CGI processes 72. The banner generation CGI processes 72 have access to a plurality of banner definition files 73 and can query the database 53 on the portal web server machine 5.

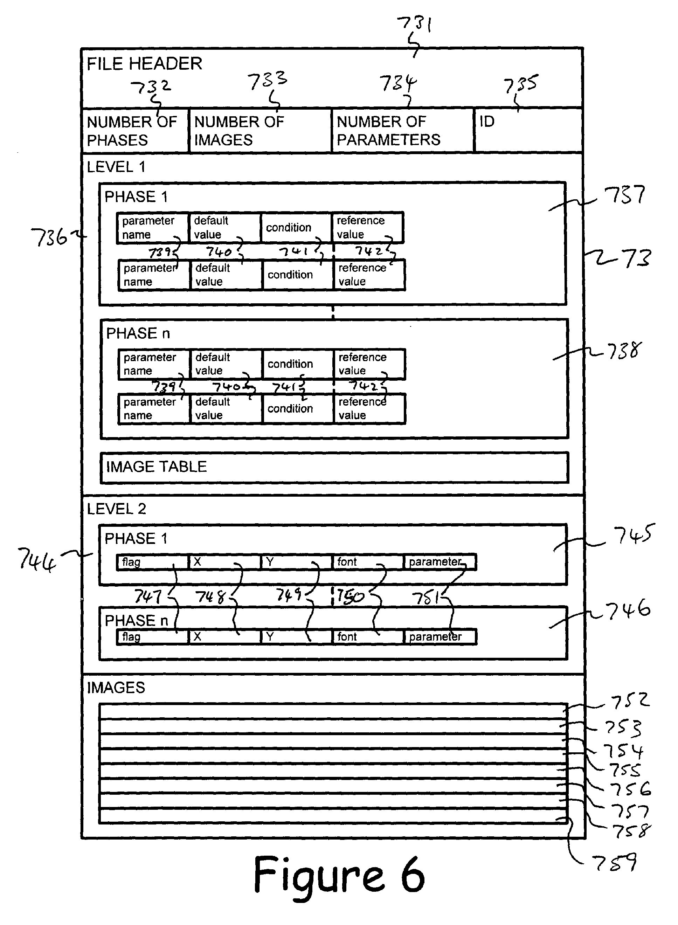

Referring to Figure 6, each banner definition entity 73 has a header 731 containing miscellaneous record data including an indication of the type of content in the content definition entity; in this case graphics. Following the header, come values for the number of phases 732 that the banner passes through, the number of images 733 in the entity 73, the number of control parameters used 734 and a unique ID 735.

A level 1 control section 736 has a subsection 737, 738 for each of the banner's phases. These subsections 737, 738 specify the control logic for the selection of the images to be used for the respective phases. For each control parameter, each subsection 737, 738 has a parameter name entry 739, a parameter default value 740, a condition (e.g. no comparison, "=", " >", " <" etc.) 741 and a reference value 742. In addition, the level 1 control section has an image table subsection 743 which maps the results of the comparisons defined by the other subsections 746, 747 onto the images available for display. For instance, if comparisons involving four parameters are used for selecting the image for one phase, the results of the comparisons are represented by a four-bit binary number, 0000, 0001, 0010 etc.

The image table for the phase in question then comprises an image ID, which need not be unique, for each four bit number, thus: -

| Comparison Result | Image ID |
|---|---|
| 0000 | 2 |
| 0001 | 3 |
| ... | ... |
| 1111 | 1 |

A level 2 control section 744 has a subsection 745, 746 for each of the banner's phases. These subsections 745, 746 specify the control logic for the insertion of text 4a (Figure 1) into the image selected for the respective phase. Each subsection 745, 746 has a flag 747 indicating whether text is to be added to the selected image, X and Y co-ordinates 748, 749 specifying the position of text to be added, a font definition 750, including font name, colour, size, whether bold, italic or underlined, and a parameter name 751 identifying the text to be inserted.

Finally, the entity 73 has a plurality of images 752, ..., 759. It is these images which are identified by the image IDs mentioned above.

The process of delivering web pages similar to that shown in Figure 1 to the client machine 6 will now be described.

When a user of the client machine 6 wishes to view a page from the portal web server machine 5, he first causes the web browser program 61 to request a login page. This will typically ask the user to enter a username and a password which are then submitted to the web server 51 at the portal web server machine 5. A CGI process 52 checks the entered username and password against the database 53 and, if they are correct, a unique user id and a unique session id value are generated and stored in the database 53 in association with the user. Then, the user is served a welcome page together with a first cookie identifying the user and a second cookie including the session id and domain attributes including the domain of the banner server machine 7.

The welcome page includes an <IMG ...> tag (see Figure 1) which contains the URL of a first banner CGI process 72 at the banner server machine 7. Since the domain attributes of the second cookie include the domain of the banner server machine 7, the request for the banner image is accompanied by the session id from the cookie.

When the web server process 71 at the banner server machine 7 receives the request and cookie data from the client machine, it runs the first banner CGI process 72. This process 72 then connects to the database 53 at the portal web server machine 5. This connection process will of course involve establishing that the first banner CGI process 72 is a legitimate user of the database 53.

Once connected, the first banner CGI process 72 sends a query such as "SELECT name, age, sex FROM users WHERE sessionid=[session id from cookie]". This returns the user's name, age and sex which data is used to control the form of the banner displayed to the user. Then the first banner CGI process 72 sends a query such as "UPDATE users SET sessionid=NULL WHERE sessionid=[session id from cookie]". This erases the session id from the database 53.

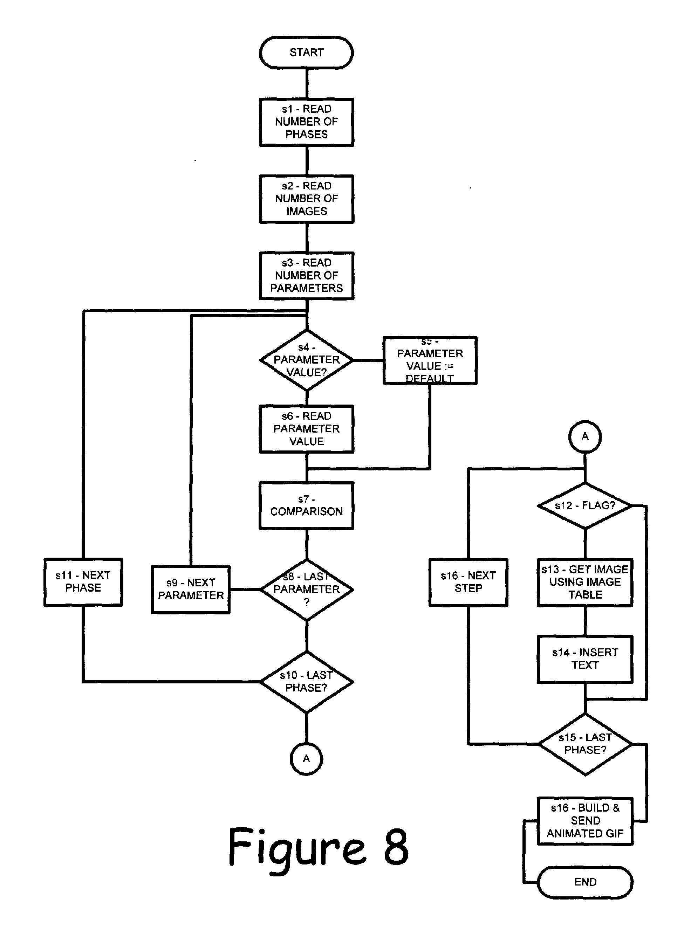

Referring to Figure 8, having obtained the user's name, age and sex, the first banner CGI process 72 reads the number of phases 732, the number of images 733 and the number of parameters 734 from the banner definition entity 73 (steps s1, s2 and s3).

For each parameter of each phase (steps s8-s11), the first banner CGI process 72 determines whether a value is available for the current parameter (step s4) and, if not, sets the parameter's value to the default value (step s5). If, on the other hand, a value is available, the parameter's value is set to this value (step s6). Then, the first banner CGI process 72 determines whether the value of the parameter meets the specified condition (step s7) and stores the result as a digit of n-bit binary number for indexing the image table for the current phase.

In the present example, the parameters comprise the user's name, age and sex. Thus, for example, a control parameter entries in a level 1 subsection 737, 738 could comprise:
age:25:>:30
and
sex:male : = : male
and the first banner CGI process 72 would process the first as follows.

Firstly, the first banner CGI process 72 would set the value of the age parameter to the user's age (step s6). When the parameter value has been set, the first banner CGI process 72 determines which comparison type to employ, in this case "is greater than", and performs the appropriate comparison between the parameter value and the reference value, i.e. 30 (step s7). If the result of the comparison is false, a 0 is added in the next unfilled column of the n-bit binary number for indexing the image table for the current phase. Similarly, if the result of the comparison is true, a 1 is added in the next unfilled column of the n-bit binary number for indexing the image table for the current phase. The processing of the sex parameter is then performed in a similar manner.

When the level 1 processing has been completed, the first banner CGI process 72 proceeds with the level 2 processing. The level 2 processing is concerned with modifying the images selected for the banner in the level 1 processing.

In level 2, for each phase (steps s15 and s16), the first banner CGI process 72 determines whether the flag is set (step s12). If the flag is not set, the first banner CGI process 72 does not process the image for the current phase. However, if the flag is set, the first banner CGI process 72 gets the image for the current phase using the image table for the current phase (step s13) and then inserts as text the value of the specified parameter, e.g. the user's name, at the position indicated by the co-ordinates, using the specified font, into the image selected in level 1 for the current phase (step s14).

When the level 2 processing is complete (step s15), the first banner CGI process 72 combines the selected, and optionally modified, images into an animated "gif" file which is stored in a temporary location and then reads and "prints" the animated "gif" file byte-by-byte to the web browser 61 at the client machine, together with the appropriate http header (content-type: image/gif) and a set cookie instruction repeating the session id but with a passed expiry date to cancel the second cookie set by the portal web server 52 (step s-17).

The animated gif image is then displayed to the user as a banner 4 on the requested web page.

If the user now clicks on a link to another page provided by the portal web server machine 5, the web browser 61 sends a request for the page together with the user id from the first cookie. A CGI process 52 at the portal web server machine 5 processes the request by checking that the user id is valid, adding a new session id to the database 53 for the user and outputting the requested page with a new session id cookie set instruction in the http header.

This page also has a banner and the banner image is obtained from the banner server machine 7 in the same manner as described above, save that the URL submitted to the banner server machine 7 causes a different banner definition entity 73 to be processed to produce the banner.

It will be appreciated that many modifications may be made to the exemplary embodiment described above. Firstly, it will be apparent that the present invention is not restricted to the serving of banner images and that other customised image formats or customised audio may be provided instead of banners. The content, be it banners other image type or audio, need not all be served from the same site.

The system may allow a user to specify the information that may be made available to the banner or other content server. If an information field is returned blank to the banner or other content server, the default values in the content definition entity will be used.

A plurality of content elements, banners etc., may be incorporated in one document.

It is preferred that the web pages including customised content delivered according to the present invention include "pragma: no-cache", or a later equivalent instruction, in the header so that a fresh session id cookie will be obtained each time a page is visited by a user. Alternatively, the user id could be used for both identifying the user to the portal web server and for releasing the user's details to the content server. However, this id will tend to persist until some time-out period has elapsed which would be undesirable from a security point of view.

It is also preferred that the communication between the content server and the portal server be encrypted.

Cookies are used in the above-described embodiment. However, the session id may be directly included in the source field of the tag for the banner or other content, e.g. http://www.bannerserver.example/banner?id=[session id].

## Claims

1. A method of operating a server machine (7) to deliver customised content to a client machine (6) over a network (8), the method comprising receiving a request for content (4) from a client machine (6) via a network (8), the request including a resource locator and supplementary data, **characterised by** querying a database (53) at the remote location in dependence on said supplementary data to obtain control data and delivering content (4), configured and/or selected in dependence on said control data, to said client machine (6).

2. A method according to claim 1, wherein said content (4) comprises a graphical image (4).

3. A method according to claim 1 or 2, wherein said content (4) is produced from a file (73) comprising both content definition data (752,... ,759) and processing definition data (736, 744) and the content definition data is modified or selected in dependence on the control data in a manner defined by said processing definition data.

4. A method according to claim 1, 2 or 3, wherein said supplementary data is comprises in a cookie.

5. A method of delivering customised content to a client machine (6) over a network (8), the method comprising receiving a request for a hypermedia document (1) from a hypermedia client (61) on a client machine (6) via a network (8) and dispatching a hypermedia document (1) to the hypermedia client (61) via the network, (8) the document including means to incorporate content (4), from a location other than that from which the document (1) was served, in the presented form thereof, **characterised by** including, in said document (7) means whereby supplementary data is sent with a request for said content (4) and serving a request for information from a database (53), the request for information from the database (53) being received from the source (7) of said content (4) and being derived from or comprising said supplementary data.

6. A method according to claim 1, including generating said supplementary data in dependence on a request for a hypermedia document (1) from the hypermedia client (61).

7. A method according to claim 6, wherein the supplementary data is comprised in a cookie.

8. A method comprising performing a method according to claim 5, 6 or 7 at a first location co-operatively with a performance of a method according to any one of claims 1 to 4 at a second location.

9. An apparatus (7) comprising processing means and network communication means configured for performing an method according to any one of claims 1 to 4.

10. An apparatus (5) comprising processing means and network communication means configured for performing an method according to any one of claims 5 to 7.

11. A system including a first apparatus (7) according to claim 9 and a second apparatus (5) according to claim 10, wherein the second apparatus (5) includes document definition means defining a hypermedia document (1) including a link to the first apparatus (7) for incorporating content (4) from the first apparatus (7) in the presented form of said hypermedia document (1).
